# EUROPEAN PATENT APPLICATION

(11) **EP 0 802 222 A1**
(43) Date of publication of application: **22.10.1997**
(21) Application number: 97302512.5
(22) Date of filing: 11.04.1997
(51) Int. Cl.: C08K 5/07, C08L 83/04, C08L 83/14, C08K 5/00, C08K 5/54

(54) **Method of adhesion improvement for silicone compositions**

(30) Priority: 18.04.1996 US 634498
(71) Applicant: DOW CORNING CORPORATION, Midland Michigan 48686-0994 (US)
(72) Inventor: Lower, Loren Dale, Midland, Michigan 48640 (US)
(74) Representative: Dowden, Marina

(57) **Abstract**

A method is disclosed for adhesion improvement of a room temperature vulcanizable (RTV) silicone composition to substrates. This is accomplished by adding a monoketoester, such as ethylacetoacetate, to an RTV silicone composition which is comprised of an alkoxy ended polydiorganosiloxane, a crosslinker having silicon-bonded methoxy or ethoxy group, a filler and a titanate catalyst. Then by applying this composition to a substrate to form intimate contact between the substrate and uncured composition. Thereafter, the composition is exposed to atmospheric moisture for a sufficient time to obtain a cured material. When tested, the bond between the cured material and the substrate surprisingly exhibits cohesive failure.

## Description

This invention introduces a method of bonding room temperature vulcanizable (RTV) silicone compositions to substrates.

The use of silicone compositions to bond substrates together in various configurations, such as gasket formation, has been widely used in the automotive industry. The use of a neutral silicone sealant for such purposes is highly desirable because sealants have little or no deleterious effects on metal or plastic substrates against which they are cured. However, when such sealants are used, especially those which contain silicon-bonded alkoxy and titanate curing catalyst, the adhesion to various substrates is not as good as customer demand. In particular, the adhesion of these sealants to plastics and metals is less than desirable and there is a longfelt need to find a way to improve that adhesion.

Australian Patent 621,150 discloses a process for improving cure time and reducing tendency to slump. This process mixes a hydroxyl or alkoxy endblocked polydiorganosiloxane, an alkoxysilane crosslinker, tetraorganotitanate catalyst and ethylacetoacetate; then devolatilizes the mixture; and packages in the absence of moisture. The use of ethylacetoacetate to produce adhesion, when combined with a polydiorganosiloxane having alkoxy endgroups, an alkoxysilane crosslinker, a filler and a titanium catalyst is not taught or suggested.

An object of this invention is to improve the bond between a substrate and the cured products of RTV silicone compositions which cure by the hydrolysis and condensation of silicon-bonded alkoxy groups.

Our invention provides a method of improving the adhesion of a RTV silicone composition to substrates comprising:
(I) adding a monoketoester to a curable RTV silicone composition comprising a polydiorganosiloxane having endgroups containing for each terminal silicon atom at least two silicon-bonded methoxy, ethoxy, propoxy or butoxy groups; crosslinker having at least two silicon-bonded methoxy or ethoxy groups per molecule; filler and titanium catalyst; where there is present 0.25 to 3 moles of monoketoester per mole of titanium atom of the titanium catalyst;
(II) applying the resulting silicone composition from (I) to a substrate surface; and
(III) exposing said composition to atmospheric moisture for a sufficient time to obtain a cured material which is bonded to the substrate surface and where the bond between said cured material and said substrate surface is such that any failure is cohesive.

In our method, a RTV silicone composition is modified by adding a monoketoester, either as the monoketoester per se or as a ligand on the titanium catalyst or by a combination of both. The monoketoester is added to the silicone composition in an amount such that there is from 0.25 to 3 moles of monoketoester per mole of titanium atom in the composition. Because many of the ingredients in these RTV silicone compositions are sensitive to moisture, it is preferred that the preparation be done under dry conditions (as moisture free as practical). These ingredients also vary in their sensitivity to moisture and one should evaluate the specific manufacturing methods for the intended formulated product to determine how carefully the moisture should be regulated.

After the RTV silicone composition containing the monoketoester is prepared, it may be stored in suitable containers which exclude the ingress of moisture. When one desires to continue with the next step, such as curing, one extrudes our modified RTV silicone composition from its storage container and applies it to a substrate surface. The particular technique for applying our composition is not critical, so long as, the composition comes into intimate contact with the substrate surface to which it is to be bonded. When the substrate-composition combination is properly accomplished for its intended purpose, the resulting product is exposed to atmospheric moisture for a sufficient time to obtain a cured material and to form an adhesive bond between the substrate and the cured RTV silicone composition. The bond between the substrate and the cured RTV silicone composition is such that any failure is only cohesive failure.

The substrates herein are any of those to which RTV silicone compositions are to be bonded and include plastics, metals, glass and the like. Because plastic substrates often lack sufficiently strong bonds with RTV silicone compositions containing silicon-bonded alkoxy groups, a means for improving this bond is very desirable. Therefore, it is unexpected that use of a monoketoester in an RTV silicone composition containing alkoxy groups would significantly improve the adhesion to plastics. Substrates to which our cured RTV compositions are successfully adhered, such that any failure is a cohesive failure, include plastics of acrylic, polyvinylchloride and polyurethane; metals such as anodized aluminum or bronzed anodized aluminum; enameled surfaces; glasses such as fiberglass; natural inorganic materials such as granite; and woods such as plywood.

The claimed RTV silicone composition is applied to one or more substrate surfaces such that they will become bonded together when the RTV composition cures. This composition is applied by conventional techniques which are commonly used to apply such compositions to substrates. The RTV silicone compositions are preferably sealant compositions that are extruded from a storage container without difficulty, for example, by using a hand extruder or mechanized extruder.

The RTV silicone composition is conveniently brought into intimate contact with the substrate surface to which it is to be bonded. The composition is then applied by various techniques known in the industry, such as troweling or tooling onto a surface or into a void or crack; calendaring onto a substrate sheet; extruding into a void; and simultaneously smoothing the surface. The composition is preferably applied to the substrate surface such that voids (air bubbles) are not formed at the interface between said substrate and said silicone composition. Voids at the interface are potential weak points where the bond might fail at lower applied forces than if such voids were not present.

After our curable RTV silicone composition is applied to the substrate and the substrate and uncured composition are properly assembled, as per the users desires, the combination is exposed to a curing atmosphere which is usually air. The air may be natural atmospheric air or it may be air that has controlled relative humidity either with or without regulated temperature. The type of exposure will generally depend upon the type of substrate and where it is located.

For example, if the substrate is part of a building, it is most impractical to control the moisture and temperature of the air to which our RTV composition is exposed, although some air control might be considered useful if atmospheric conditions so demand. Other situations may allow the use of air where humidity and temperature are controlled, such as in the preparation of parts for automobiles or for preformed windows and wherein the parts are placed in controlled atmosphere chambers. The curing begins almost immediately upon exposure to air and a surface skin will form within a few minutes to a hour. Complete cure is accomplished within a week's time at which time the bond between said substrate and said composition is such that any failure will be cohesive failure.

The monoketoester ingredient of this invention is mixed with the conventional ingredients of RTV silicone compositions that typically include a polydiorganosiloxane having endgroups containing a silicon atom which has at least two silicon-bonded alkoxy groups selected from methoxy, ethoxy, propoxy and butoxy; crosslinker having at least two silicon-bonded alkoxy groups per molecule where the alkoxy is methoxy or ethoxy; filler and titanium catalyst for promoting room temperature cure of the silicone sealant composition. These RTV silicone compositions are prepared from ingredients well known in the art and are illustrated by the following US-As 3,151,099; 3,161,614; 3,175,993; 3,334,067; 4,871,827; 4,898,910 and 4,956,435, which show ingredients used to prepare typical RTV silicone compositions and methods of their preparation.

For this invention, a monoketoester is an organic compound which contains one ketone group and one ester group. It can be a compound such as ethylacetoacetate, 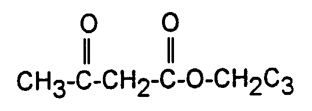 or the monoketoester is bonded as a ligand to some of the titanium atoms of the titanium catalyst. The monoketoester is either the monoketoester per se, a ligand on the titanium catalyst, or a mixture of said monoketoester and said catalyst. An example of a titanium catalyst having a monoketoester as a ligand is diisopropoxy-bis-ethylacetoacetate. The amount of the monoketoester is from 0.25 to 3 moles of monoketoester per one mole of titanium atom in the RTV silicone composition. Preferably, there is present from 0.5 to 2 moles of monoketoester per mole of titanium.

The polydiorganosiloxanes for the RTV silicone compositions are those which have endgroups containing silicon atoms with at least two alkoxy groups per terminal. These polydiorganosiloxanes include those in which the linkages between the silicon atoms of the polymer chain are oxygen atoms and those polymers where the linkages between the silicon atoms are oxygen atoms and the end segments contain at least one linkage of a divalent hydrocarbon radical between said silicon atoms of said polymer chain. These polydiorgano-siloxanes are known in the art. These polydiorganosiloxanes are also potential mixtures of polymers wherein some of the polydiorganosiloxane molecules have one endgroup as a triorganosiloxy unit, such as trimethylsiloxy or vinyldimethylsiloxy, and the other endgroup is a silicon-bonded alkoxy unit.

In these mixtures, less than 50 percent of the total endgroups are triorganosiloxy for those polydiorgano-siloxanes with divalent oxygen atoms linking the silicon atoms of the polymer chain, preferably less than 20 percent of the endgroups are triorganosiloxy. In those mixtures which have end segments where divalent hydrocarbon radicals link some of the polymer chain silicon atoms, there is from 3 to 40 percent of the endgroups as triorganosiloxy units. Preferably, the triorganosiloxy units are vinyldimethylsiloxy, and more preferably the triorganosiloxy endgroups are present in less than 25 percent of the total endgroups. Each endgroup which bears silicon-bonded alkoxy groups have, on average, at least two alkoxy groups per endgroup of the silicon atom. The alkoxy groups are methoxy, ethoxy, propoxy or butoxy.

The polydiorganosiloxanes having endgroups containing silicon atoms with at least two silicon-bonded alkoxy groups per silicon and where the silicon atoms of the polymer chain are linked by oxygen atoms are exemplified by the disclosures of US-As 3,151,099 or 3,161,614 and are illustrated by the formula 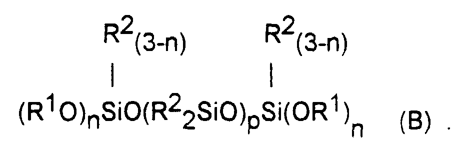 and by the mixtures of polydiorganosiloxanes of formula (B) and polydiorganosiloxanes of the formula 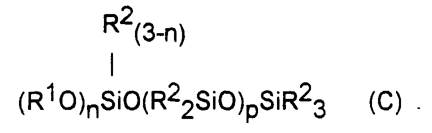 In the above formulae, R¹ is alkyl of from 1 to 5 carbon atoms, such as methyl, ethyl, propyl, isopropyl, butyl, isobutyl and amyl; R² is methyl, ethyl, vinyl or phenyl; n is 2 or 3 and p has an average value of at least 200. Alkoxy containing endgroups are those which preferably have as the alkoxy groups, methoxy, ethoxy and combinations thereof. These preferred polydiorganosiloxanes are the polydimethylsiloxanes, and especially those with viscosities at 25°C. of from 5 to 150 Pa·s.

The polydiorganosiloxanes with end segments containing linkages of divalent hydrocarbon radicals between some of the silicon atoms of the polymer chain are described by U.S. Patents 3,175,993; 4,871,827 and 4,898,910, which disclose polydiorganosiloxanes having end segments with at least one divalent hydrocarbon radical linkage between polymer chain silicon atoms and their methods of preparation. These latter polydiorganosiloxanes are illustrated by the following general formula 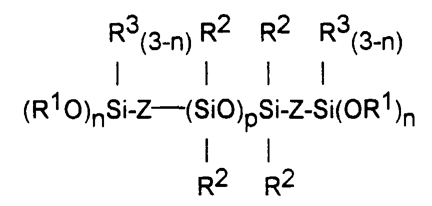 where R¹, R², n, and p are described above. R³ is methyl, ethyl, or phenyl, and Z is a divalent hydrocarbon radical or a combination of divalent hydrocarbon radicals and siloxane oxygen radicals. The divalent hydrocarbon radicals are those having from 2 to 18 inclusive carbon atoms and are illustrated by ethylene, propylene, butylene, pentylene and hexylene, preferably ethylene. Where Z is a combination of divalent hydrocarbon radicals and siloxane oxygen radicals, the polydiorganosiloxanes with end segments containing divalent hydrocarbon linkages and divalent oxygen atom linkages between the polymer chain silicon atoms, have end segments which contain as Z, the following general formula 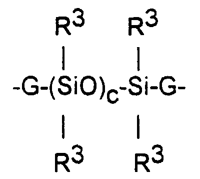 where c is 1 to 6, R³ is defined above, and G is a divalent hydrocarbon radical free of aliphatic unsaturation of 2 to 18 carbon atoms.

These polydiorganosiloxanes are prepared by reacting a hydrogen endblocked polydiorganosiloxane with a silane having an alkenyl radical in the presence of a hydrosilylation catalyst such as a platinum compound or complex. If one uses a silane of the following formula, a polydiorganosiloxane described in US-A 3,175,993, is produced having the formula 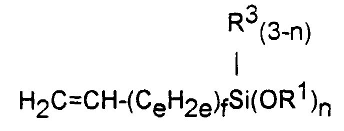 where e is 1 to 16, f is 0 or 1, and R¹, R², R³, and n are defined above. If one uses an endcapper, such as one of the following formula, those polydiorganosiloxanes described by US-As 4,871,827 or 4,898,910 are produced 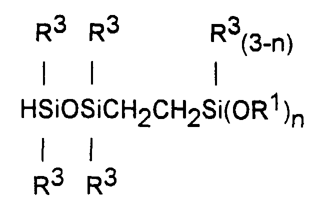 where R¹, R², and n are defined above. The preferred polydiorganosiloxanes of this kind are those where the divalent hydrocarbon radical is ethylene and has a viscosity at 25°C. of 5 to 150 Pa·s.

The crosslinkers of our curable RTV silicone compositions are alkoxysilanes which have at least two alkoxy groups per molecule wherein the alkoxy groups are either methoxy or ethoxy. These alkoxysilanes preferably contain two, three, or four alkoxy groups per molecule, and are illustrated by methyltrimethoxysilane, methyltri-ethoxysilane, vinyltrimethoxysilane, vinyltriethoxysilane, ethyltrimethoxysilane, ethyltriethoxysilane, phenyltrimethoxysilane, phenyltriethoxysilane, tetraethoxysilane, mixtures of these alkoxysilanes and their partial hydrolyzates.

Those alkoxysilanes which contain two methoxy or ethoxy groups per silane molecule are illustrated by dimethyldimethoxysilane, dimethyldiethoxysilane, and methylethyldimethoxysilane. Preferably, the alkoxysilanes are dimethyldimethoxysilane, methyltrimethoxysilane, or mixtures with other alkoxysilanes wherein methyltri-methoxysilane comprises a majority of the alkoxysilanes in the mixture. The amount of alkoxysilane crosslinker is preferably from 1 to 10 weight percent based on the total weight of our RTV silicone composition, more preferred is from 3 to 8 weight percent.

The claimed RTV silicone compositions also comprise a filler which is selected from those known useful in the art. These fillers include calcium carbonate both ground, precipitated and colloidal; calcium carbonates which are treated with stearate; crushed quartz, ground quartz; alumina; aluminum hydroxide; titanium dioxide; diatomaceous earth; reinforcing silicas, such as fumed silica, precipitated silica and hydrophobed reinforcing silica, iron oxide; carbon black and graphite. The amount of filler is preferably from 5 to 50 weight percent based on the total weight of our curable RTV silicone composition.

The titanium catalyst for promoting the cure of our RTV silicone compositions are those illustrated in US-As 3,151,099; 3,161,614 and 3,175,993. The titanium catalyst is either tetraalkoxytitanates or chelated titanium compounds. Examples of these are tetraethyl titanate, tetraisopropyl titanate (TPT), tetra-n-propyl titanate, tetrabutyl titanate (TBT), bis-acetylacetonyldiisopropyl titanate, diisopropyl-bis-ethylacetoacetate titanium and 1,3-dioxypropane-titanium-bis(ethylacetoacetate). The latter is more completely described by US-A 4,722,967, which provides chelated titanates. The amount of titanium catalyst is a catalytic amount for curing our claimed RTV silicone compositions and is preferably from 0.1 to 5 weight percent, based on the total weight of the RTV silicone composition. As previously explained, when the titanium catalyst is one which contains a monoketoester ligand, the monoketoester compound per se does not need to be added if the amount of the ligand is present in an amount of from 0.25 to 3 moles of monoketoester per one mole of titanium atom in the titanium catalyst.

Other ingredients which are conventionally used in RTV silicone compositions, such as adhesion promoters, fungicides, colorants, pigments and plasticitizers can be added as long as they do not interfere with the adhesion between the substrate and the cured material, the curing properties or their physical properties.

A devolatilization step can be used while ingredient mixing is taking place. Reduced pressure (partial vacuum) alone, or with heating, can also be used if the heat generated by mixing is insufficient to effectively remove volatiles, especially the by-produced methanol or ethanol. The mixing procedure is usually done under conditions which exclude atmospheric moisture, especially if the resulting modified RTV silicone composition, is to be packaged and stored for either shipment or later use. When the preparation of our RTV silicone composition involves removal of volatiles after crosslinker is added, such as a devolatilization step, the crosslinkers with low boiling points might be lost and one should ensure that the resulting compositions are storage stable and will not cure in their containers.

Our modified RTV silicone composition enhances the bond between a substrate and a cured RTV silicone composition, especially during bonding of at least two substrate surfaces. The modified RTV silicone composition is then brought into contact with at least one surface by conventional means, such as by extrusion, coating, injection, knifing and rolling. The surfaces of the substrates are brought together to form a confined configuration wherein said substrates are adhered to each other by a strong bond formed by our claimed silicone composition. After our modified RTV silicone composition is applied to a substrate, it is exposed to atmospheric moisture to cause cure of the silicone material and to bond with the substrate.

This invention is further illustrated by the following example which is presented for that purpose and to properly delineate the claims. In the example, "part" or "parts" refer to part or parts by weight and the viscosities were measured at 25°C. NT represents "not tested" in this example.

### EXAMPLE 1

Room temperature vulvanizable (RTV) silicone compositions were obtained by mixing under reduced pressure in a change can mixer, 70 parts of a polydiorganosiloxane mixture (Polymer A), having a viscosity of 60 Pas, and made by the process of US-A 4,898,910, and having polydiorganosiloxanes of the following formulae 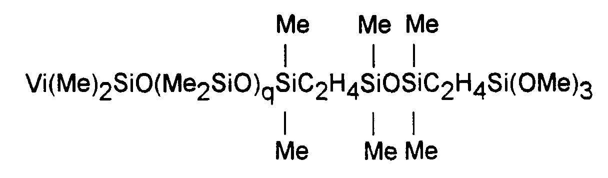 and 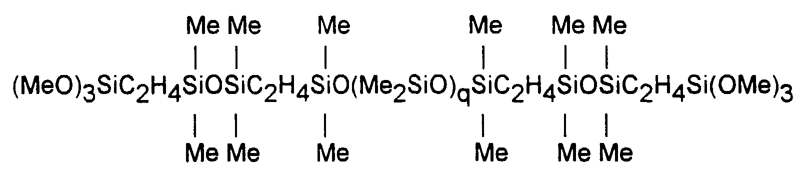 where Me is methyl, Vi is vinyl, and q has an average value such that the viscosity is 60 Pa·s and 20 percent of the endgroups are vinyldimethylsiloxy units, and 30 parts of a polydimethylsiloxane prepared as Polymer A except it had a viscosity of 10 Pa·s; 13.5 parts of a fumed silica filler having a surface area of 200 m²/g and treated with dimethyldimethoxysilane, except Sample No. 5 where 10.8 parts of the same filler were used. Then, 3 parts of dimethyldimethoxysilane, as a crosslinker, except Sample No. 5 where 5.6 parts were used; and an adhesion promoter in an amount as shown in Table 1 (being a mixture of 30 weight percent of gamma-aminopropyltriethoxysilane and 70 weight percent of gamma-glycidoxypropyltrimethoxysilane; a titanium catalyst of the type and amount shown in Table 1; and an amount of ethylacetoacetate as shown in Table 1, were all added and mixed together. The resulting mixture was stored in Semkit^{(R)} tubes and centrifuged. The filled tubes were stored in a 50°C. oven overnight before any testing was done.

The adhesion to the substrates shown in Table 1 was determined by the following procedure: Each substrate was wiped with a 50/50 weight solution of isopropanol and water and then allowed to dry. The RTV silicone composition was then applied as a 0.6 cm bead of sealant which was immediately tooled with a small spatula to provide a bead of 0.3 cm in depth. The bead was then allowed to cure 10 days by exposure to ambient air. One end of the cured bead was undercut with a razor blade and pulled up at 90 degrees and the percentage of cohesive failure was judged by observation. Adhesion was also done for some substrates by soaking the cured bead, prepared as describe above, for 1 day in water and then evaluating the adhesion in the same manner. The observed results are shown in Table 1.

**TABLE 1**

| | SAMPLE NO. | | | | | |
|---|---|---|---|---|---|---|
| | 1 | 2 | 3 | 4 | 5 | 6 |
| Adhesion Promoter, parts | 0.5 | 1 | 0.5 | 1 | 1 | 0.5 |
| Titanium Catalyst, type | TBT | TBT | TPT | TPT | TBT | TPT |
| Titanium Catalyst, parts | 1.6 | 1.6 | 1.3 | 1.3 | 1.6 | 1.3 |
| Ethylacetoacetate, parts | 0 | 0 | 0 | 0 | 0 | 1.24 |
| | | | | | | |
| Cohesive Failure, % | | | | | | |
| 10 days at room temperature | | | | | | |
| Acrylic plastic sheet | 0 | 0 | 0 | 0 | 0 | 100 |
| Polyvinylchloride | 0 | 0 | 0 | 0 | 0 | 100 |
| Concrete | 0 | 0 | 0 | 0 | 0 | 0 |
| Anodized aluminum | 0 | 0 | 0 | 0 | 50 | 100 |
| Cohesive Failure, % | | | | | | |
| 1 day immersion in water | | | | | | |
| Acrylic plastic sheet | 0 | 0 | 0 | 0 | 0 | 100 |
| Polyvinylchloride | 0 | 0 | 0 | 0 | 0 | 0 |
| Concrete | 0 | 0 | 0 | 0 | 0 | 0 |
| Anodized aluminum | 0 | 0 | 0 | 0 | 50 | 100 |

### EXAMPLE 2

RTV silicone compositions were again prepared as described in Example 1, using the same ingredients and procedure, except various carbonyl (C=O) containing compounds were substituted for the ethylacetoacetate. These compounds are identified in Table 2 and were used in the indicated amounts. The adhesion of cured RTV silicone compositions to various substrates was also done as described in Example 1.

**TABLE 2**

| | SAMPLE NO. | | | | | | |
|---|---|---|---|---|---|---|---|
| | 7 | 8 | 9 | 10 | 11 | 12 | 13 |
| Adhesion Promoter, parts | 0.5 | 0.5 | 0.5 | 0.5 | 0.5 | 0.5 | 0.5 |
| Mixture of TBT and | | | | | | | |
| C=O compound, parts | 2.4 | 3.2 | 2.4 | 3.2 | 1.6 | 2.2 | 2.8 |
| TBT, moles | 1 | 1 | 1 | 1 | 50% | 1 | 2 |
| Ethylacetoacetate, moles | 0 | 0 | 0 | 0 | 0 | 1 | 2 |
| Diethylmalonate, moles | 1 | 2 | 0 | 0 | 0 | 0 | 0 |
| Diethylmaleate, moles | 0 | 0 | 1 | 2 | 0 | 0 | 0 |
| Ethyl acetate, weight | 0 | 0 | 0 | 0 | 50% | 0 | 0 |
| | | | | | | | |
| Cohesive Failure, % | | | | | | | |
| 10 days at room temperature | | | | | | | |
| Acrylic plastic sheet | 0 | 0 | 0 | 0 | 0 | 100 | 100 |
| Polyvinylchloride | 0 | 0 | 0 | 0 | 0 | 100 | 100 |
| Anodized aluminum | 0 | 0 | 0 | 0 | 0 | 100 | 100 |
| Acrylic plastic** | 0 | 0 | 0 | 0 | 0 | 100 | 100 |
| | | | | | | | |
| Cohesive Failure, % | | | | | | | |
| 1 day immersion in water | | | | | | | |
| Acrylic plastic sheet | NT | NT | NT | NT | NT | 0 | 0 |
| Polyvinylchloride | NT | NT | NT | NT | NT | 100 | 100*** |
| Anodized aluminum | NT | NT | NT | NT | NT | 100 | 100 |
| Acrylic plastic** | NT | NT | NT | NT | NT | NT | NT |

| | | | | | | | |
|---|---|---|---|---|---|---|---|
| *Sample No. 11 was prepared using 50 weight percent TBT and 50 weight percent ethyl acetate **This acrylic plastic was different from the acrylic plastic sheet and has a trade name Duracron™. | | | | | | | |
| ***One of two samples evaluated had 100% cohesive failure after water immersion and the other had 0% cohesive failure after water immersion. | | | | | | | |

### EXAMPLE 3

RTV silicone compositions were again prepared as in Example 1, with Sample No. 1 using the same ingredients and procedure, except amount of silica filler, the amounts of dimethyldimethoxysilane and ethylacetoacetate are shown in Table 3, and the titanium catalyst was tetrabutyl titanate present in an amount of 1.6 parts. The adhesion of cured RTV silicone compositions to various substrates was as described in Example 1.

**TABLE 3**

| | SAMPLE NO. | | | |
|---|---|---|---|---|
| | 14 | 15 | 16 | 17 |
| Silica filler, parts | 10 | 11 | 11 | 9 |
| Dimethyldimethoxysilane, parts | 3.2 | 3 | 3 | 3 |
| Ethylacetoacetate, parts | 0.62 | 0.6 | 1.2 | 0.6 |
| Slump, mm | 5 | 0 | 0 | 15 |
| Cohesive Failure, % | | | | |
| 6 days at room temperature | | | | |
| Acrylic plastic sheet | 100 | 100 | 100 | 100 |
| Polyvinylchloride, gray | 100 | 100 | 100 | 100 |
| Polyvinylchloride, brown | 100 | 100 | 100 | 100 |
| Cohesive Failure, % | | | | |
| 6 days immersed in water | | | | |
| Acrylic plastic sheet | 0 | 0 | 0 | 0 |
| Polyvinylchloride, gray | 100 | 100 | 100 | 100 |
| Polyvinylchloride, brown | 100 | 100 | 100 | 100 |

### EXAMPLE 4

RTV silicone compositions were again prepared per Example 1, with Sample No. 1 using the same ingredients and procedure, except the titanium catalyst was diisoproxy-bis-ethylacetoacetate in an amount of 2 parts, the crosslinker was dimethyldimethoxysilane (DMDM) in Sample No. 18 and was present in an amount of 3 parts, the crosslinker was methyltrimethoxysilane (MTM) in Sample No. 19 and was present in an amount of 2 parts, and no ethylacetoacetate was present. The adhesion of cured RTV silicone compositions to various substrates was repeated as in Example 1 and the results are shown in Table 4.

**TABLE 4**

| | SAMPLE NO. | |
|---|---|---|
| | 18 | 19 |
| Cohesive Failure, % | | |
| 7 days at room temperature | | |
| Acrylic plastic sheet | 100 | 100 |
| Polyvinylchloride | 100 | 100 |
| Anodized aluminum | 100 | 100 |
| | | |
| Cohesive Failure, % | | |
| 13 days at room temperature | | |
| Acrylic plastic sheet | 100 | 100 |
| Polyvinylchloride | 100 | 100 |
| Anodized aluminum | 100 | 100 |
| | | |
| Cohesive Failure, % | | |
| 13 days at room temperature and 1 day immersion in water | | |
| Acrylic plastic sheet | 75 | 25 |
| Polyvinylchloride | 10 | 0 |
| Anodized aluminum | 100 | 100 |
| | | |
| Cohesive Failure, % | | |
| 13 days at room temperature and 4 days immersed in water | | |
| Acrylic plastic sheet | 60 | 35 |
| Polyvinylchloride | 10 | NT |
| Anodized aluminum | 100 | 100 |

### EXAMPLE 5

RTV silicone compositions were prepared by mixing 100 parts of a polydiorganosiloxane and an amount of crosslinker as shown in Table 5; adding titanium catalyst and mixing; and then adding silica filler and ethylacetoacetate. The polydiorganosiloxanes were Polymer A, Polymer B was the same as Polymer A except that the polymer had 10 percent of the endgroups as vinyldimethylsiloxy units, and Polymer C was the same as Polymer A except that none of the endgroups were vinyldimethylsiloxy units. The crosslinker was DMDM or MTM as identified in Table 5, the titanium catalyst was tetrabutyl titanate in the amounts shown in Table 5, and the ethylacetoacetate was present in the amounts of Table 5. The adhesion was again evaluated as in Example 1 and the results are in Table 5.

The physical properties of each RTV silicone composition were evaluated after test pieces were prepared and allowed to cure for 14 days at ambient conditions. The measured properties were durometer on the Shore A scale, tensile strength at break and elongation at break. The extrusion rate was determined on the uncured RTV silicone composition by extruding it through a nozzle with a 0.3175 cm orifice using a 620.5 kPa pressure and by measuring the amount extruded in grams per minute (g/min). Additional measurements used to evaluate the curing characteristics of the composition were skin-overtime (SOT) and tack-free-time (TFT). The durometer was determined according to ASTM D 2240, Scale A. The tensile strength at break, the elongation at break, and the 100% modulus were determined by ASTM D 412. SOT was the time in minutes measured between the time a bead of the composition was extruded into air atmosphere and the time at which a light touch of a finger to the bead surface did not stick to the finger. TFT was the time in minutes measured between the time a bead of composition was extruded in air atmosphere and the time a square of polyethylene film, placed on said bead, was removed without marring the bead surface. The slump was determine by ASTM D 2202.

**TABLE 5**

| | SAMPLE NO. | | |
|---|---|---|---|
| | 20 | 21 | 22 |
| Polymer A, parts | 0 | 0 | 100 |
| Polymer B, parts | 100 | 0 | 0 |
| Polymer C, parts | 0 | 100 | 0 |
| DMDM, parts | 0 | 7 | 0 |
| MTM, parts | 8 | 0 | 7 |
| TBT, parts | 1.5 | 1.6 | 1.6 |
| Silica filler, parts | 10 | 10 | 9 |
| Ethylacetoacetate, parts | 0 | 0 | 0.61 |
| Durometer, Shore A scale | 32 | 28 | 29 |
| Tensile strength at break, kPa | 2075 | 2868 | 1979 |
| Elongation at break, % | 301 | 682 | 360 |
| Slump, mm | 127 | 711 | 51 |
| SOT, minutes | 13 | 10 | 13 |
| TFT, minutes | 75 | 40 | 57 |
| | | | |
| Cohesive Failure, % | | | |
| 14 days at room temperature | | | |
| Bronzed anodized aluminum | 0 | 0 | 100 |
| Enamel paint | 0 | 0 | 100 |
| Fiberglass | 0 | 0 | 100 |
| Polyurethane plastic | 0 | 0 | 100 |
| Granite | 0 | 0 | 100 |
| Plywood | 0 | 0 | 100 |

## Claims

1. A method of improving the adhesion of a room temperature vulcanizable silicone composition to substrates comprising
(I) adding a monoketoester to a room temperature vulcanizable silicone composition comprising a polydiorganosiloxane having endgroups containing for each terminal silicon atom at least two silicon-bonded methoxy, ethoxy, propoxy or butoxy groups; a crosslinker having at least two silicon-bonded methoxy or ethoxy groups per molecule; filler; and titanium catalyst; characterized by the presence of 0.25 to 3 moles of monoketoester per one mole of titanium atom in the titanium catalyst;
(II) applying the resulting silicone composition from (I) to a substrate surface,
(III) exposing the silicone composition to atmospheric moisture for a sufficient time to obtain a cured material bonded to the substrate.

2. The method in accordance with claim 1 in which the silicone composition has as the polydiorganosiloxane, a polydiorganosiloxane of the formula 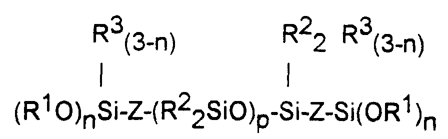 where R¹ is methyl or ethyl; R² is methyl, ethyl, vinyl, or phenyl; R³ is methyl, ethyl, or phenyl; n is 2 or 3: p is at least 200; and Z is selected from a divalent hydrocarbon radical free of aliphatic unsaturation of 2 to 18 carbon atoms or a divalent group of the general formula 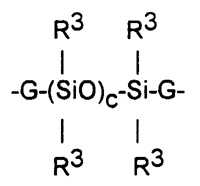 where R³ is defined above, G is a divalent hydrocarbon radical free of aliphatic unsaturation of 2 to 18 carbon atoms, and c is from 1 to 6 inclusive.

3. The method in accordance with claim 1 or claim 2 in which the monoketoester is ethylacetoacetate.

4. The method in accordance with any of claims 1 to 3 in which the crosslinker is selected from dimethyldimethoxysilane or methyltrimethoxysilane.

5. The method in accordance with any of claims 1 to 4 in which the titanium catalyst is a tetraalkyl titanate of the formula Ti(OR)₄ where R is ethyl, propyl, butyl or amyl.

6. The method in accordance with any of claims 1 to 4 in which the titanium catalyst is dialkoxy-bis-ethylacetoacetate titanium and the ethylacetoacetate ligand of said titanium catalyst is at least a portion of the required monoketoester.

7. The method in accordance with claim 6 in which the alkoxy group in the dialkoxy-bis-ethylacetoacetate titanium is isopropoxy.

8. The method in accordance with any of claims 1 to 7 in which the substrate is a plastic or metal substrate.

9. The method in accordance with claim 8 in which the plastic substrate is acrylic.

10. The method in accordance with claim 8 in which the metal substrate is anodized aluminum.
